Europäisches Patentamt

(19) European Patent Office

Office européen des brevets

(11) Publication number: **0 045 625**
**A2**

(12) # EUROPEAN PATENT APPLICATION

(21) Application number: **81303483.2**

(22) Date of filing: **30.07.81**

(51) Int. Cl.³: **B 65 G 51/20**
**B 65 G 51/30**

(30) Priority: **05.08.80 GB 8025503**

(43) Date of publication of application:
**10.02.82 Bulletin 82/6**

(84) Designated Contracting States:
**AT BE CH DE FR GB IT LI LU NL SE**

(71) Applicant: **D D Lamson Limited**
**Harbour Road**
**Gosport Hampshire PO12 1BG(GB)**

(72) Inventor: **Alexander, Donald**
**Kiln Road**
**Fareham Hampshire(GB)**

(74) Representative: **Townsend, Derek Thomas**
**Moore Research Centre Station Approach**
**Waltham Cross Herts EN8 7ND(GB)**

(54) Improvements in or relating to pneumatic tube carrier systems.

(57) A pneumatic tube carrier system having an air tube connecting two stations and through which a carrier is moved, a supply of air for supplying air under pressure or under vacuum to propel the carrier between the stations and air pressure means to cause the air in the tube to assume a pressure close to atmospheric pressure at the exit end of the tube as the carrier approaches the exit end to cause the carrier to travel slowly along the exit part of the tube as the carrier reaches the end part of the tube.

FIG. 4

This invention has reference to Pneumatic Tube Carrier Systems.

Pneumatic tube carrier systems usually consist of two stations connected by an air tube. A carrier is inserted at one station and is transmitted through the tube to the other station. Sometimes, the systems are more complex and include junctions whereby the carrier can be conveyed to a selected one of a plurality of stations. In such tube systems the station comprises, a box with the end of the tube connecting the two stations projecting into the box. When a carrier is conveyed along the tube, when it reaches the station, it falls into the box where it is retained until collected by a responsible person.

In Pneumatic Tube Systems, the carrier is conveyed at speed through the tube, and sometimes it falls into the box at a faster speed than is desirable. Various means have been proposed to prevent the carrier falling into the box at too great a speed. For example, in patent specification number 1088149, we arrange a plurality of leather or the like sheets in vertical disposition in close proximity to the end of the tube which is at that position arranged horizontally. The carriers when being ejected from the tube come into contact with the first of the leather sheets which is then urged into contact with the second leather sheet and perhaps the third leather sheet. The momentum of the carrier is substantially reduced and falls into the floor of the box. In British patent specification number 940223 there is described a pneumatic tube system in which at each station, air cushion providing means are arranged whereby a cushion of air is provided near the end of the tube, slowing down the carrier as it approaches the end of the tube.

It is an object of the present invention to provide an improved and simple pneumatic tube carrier system.

It is a further object of the present invention to provide a pneumatic tube carrier system in which the construction of the stations may be substantially simplified.

According to the present invention, a pneumatic tube carrier system comprises an air tube connecting two stations and through which a carrier is moved, a supply of air for supplying air under pressure or under vacuum to propel the carrier between the stations and air pressure      means to cause the air in the tube to assume a pressure close to atmospheric pressure at the exit end of the tube as the carrier approaches the exit end to cause the carrier to travel slowly along the exit part of the tube as the carrier reaches the end part of the tube.

Pneumatic tube carrier systems in accordance with the present invention will now be described by way of example with reference to the accompanying drawings wherein, Figs 1 to 4 are diagrams of respective pneumatic tube systems. Figure 5 shows a detail, and Figure 6 is a circuit diagram.

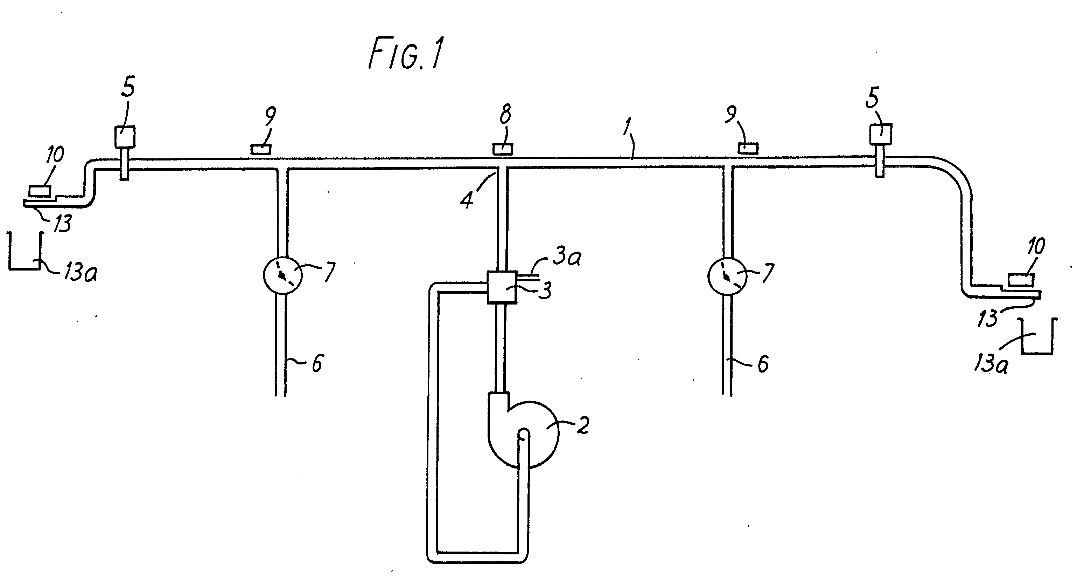

Referring to Fig 1 of the drawings there is shown a pneumatic tube system embodying a tube 1 conveniently having a diameter of 100 mms with the ends of the tube at opposite ends thereof open. An air moving machine 2 which may serve either an exhauster or blower (that is to supply air under vacuum or under pressure to the tube 1) is connected to the line 1 at a junction position 4 through a reversing valve 3. The reversing valve 3 is arranged to supply air under pressure or air under vacuum to the tube 1 and as shown it joins the tube 1 at the junction position 4 between the ends of the tube 1. An air vent 3a is capable of connecting one side of the reversing valve 3 to atmosphere. In this particular arrangement, when a carrier is inserted into the tube at one end thereof, for example at the left hand side as shown in Fig 1, air from the machine 2 and through the reversing valve 3 is arranged to draw the carrier by air under vacuum up to and just beyond the position 4 at which time the pressure of the air being supplied through the reversing valve 3 is changed to supply air under pressure in order that the carrier may be propelled under pressure air through the remainder of the tube 1 to the right hand end of the tube. A gate 5 is provided in the tube 1 near each end thereof. This gate serves in one position to permit free access of air through the gate or in the other position to cut off the supply of air through the gate. Adjacent to each gate is supplied an air escape tube 6 and in this tube 6 is arranged a butterfly valve 7. A detector switch 8 is located in the tube 1 adjacent to the position 4 and a detector switch 9 is provided at a position between the junction between the tube 6 and the tube 1 and the gate 5 adjacent each end of the tube system. These detector switches 8, 9 are connected up in a control circuit and are arranged to detect the presence of a carrier as it passes through the tube 1. There is also provided a control mechanism including operating switches, 10 adjacent to each end of tube 1 to enable the carrier to be detected when the carrier is inserted in the pneumatic tube system. Thus, when a carrier is to be despatched from one end of the tube for example in the tube shown on the left hand side of Fig 1, the carrier is inserted into the tube 1 at the left hand end.

When it is in position the switch 10 associated with the control mechanism is depressed and this energises the control system. Alternatively, a switch 10 in the control box may automatically detect the position of a carrier adjacent the end of the tube. This control system serves to control the air moving machine 2 and to move the air reversing valve 3 to the position where air is exhausted from the system and the air in tube 1 is under vacuum. The gate 5 on the left hand side of Fig 1 is opened and the gate 5 on the right hand side of Fig 1 is closed. The butterfly valve 7 on the left hand side of the drawing is closed and the butterfly valve on the right hand side of the drawing is also closed.

The detector switch 9 on the left hand side of the figure
is inoperative. The carrier inserted into the left hand end
of the tube is pulled from the left hand end of the tube I
by the air under vacuum until it passes the detector switch 8.

The carrier passes into the right hand side of the tube
beyond the point 4. At the same time as it passes into
this part of the tube its position will be sensed by the
detector switch 8 and sensing means will serve to reverse
the reversing valve and supply air under pressure to the tube I.

The control circuit is energised and in consequence the gate 5
on the left hand side of the drawing will be closed and the
gate 5 on the right hand side of the drawing will be open.
Therefore, air under pressure will cause the carrier to be moved
along the tube I towards the right hand end of the tube. This progress will continue until the carrier reaches the detector switch 9 whereupon operation of this detector switch 9 will serve to operate the control circuits to open the butterfly valve 7 on the right hand side of Fig 1 and after delay to open the gate 5 also on the right hand side of Fig 1. By this means, the pressure behind the carrier is substantially reduced. The butterfly valve 7 is controlled to close slowly to enable the pressure supplied from the reversing valve 3 to be built up in the pipe 1. However, this closure of the operating valve is slow and is so arranged that there is a pressure slightly higher than atmospheric pressure in the tube so the carrier is caused to move slowly to the end of the tube 1 on the right hand side of the figure until it finally comes to a halt closely adjacent to the end of the tube 1 where it may be picked out of the end of the tube by the operator.

It will be apparent that a carrier may be inserted into the right hand side of the tube to convey it to the left hand side of the tube as is required. The operation of the devices will be similar but in reverse.

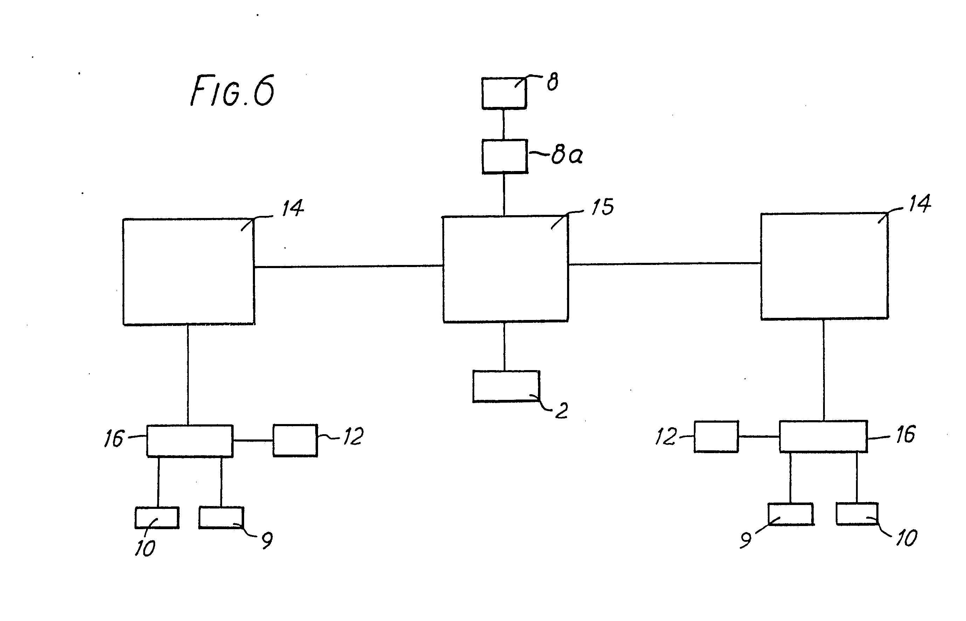

The respective ends of the tube 1 are open to atmosphere.
Preferably as shown in Fig 5 the ends of the tube 1 are
cut away so that their upper halves are removed to
provide a gutter portion 13 at the end of the tube 1.
When a carrier arrives at a station (as shown in
dotted lines in Fig 5) it is moved slowly by the pressure
of air in the tube 1 on to the gutter portion 13 until
the trailing end of the carrier moves out of the circular
part of the tube 1. When in the gutter portion air is
allowed to escape between the end of the circular tube 1
and the trailing end of the carrier. If a further
carrier is received at a station with a carrier already
in the gutter portion 13 the second carrier pushes the
first carrier off the end of the gutter 13 into a receiving
basket 13a (Fig 1). When a carrier is received at a
station its location is detected by the switch 10 which
operates to switch off the air supply from the air moving
machine 2.

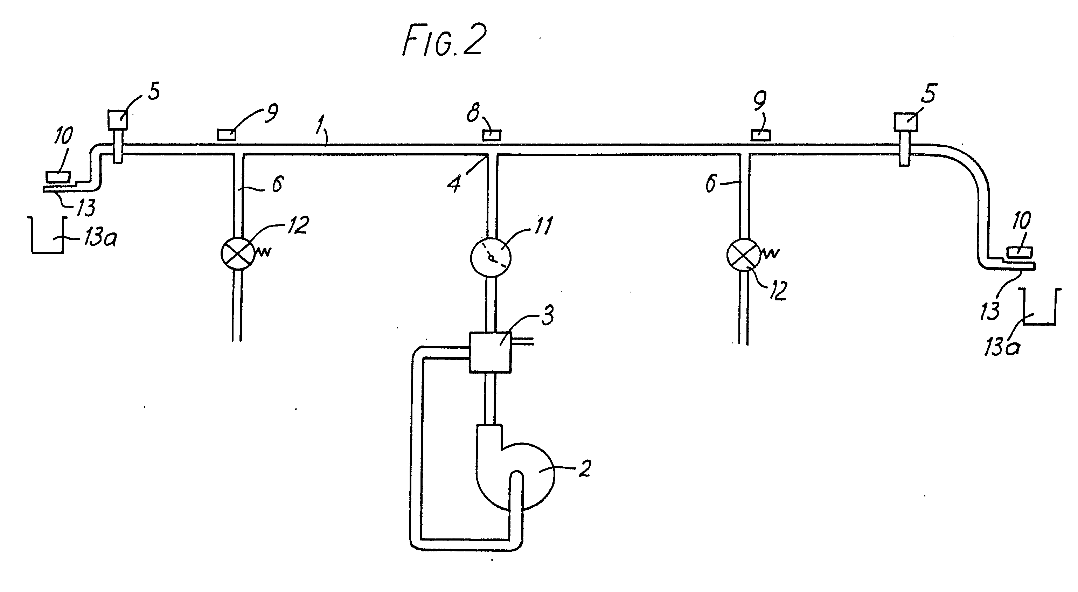

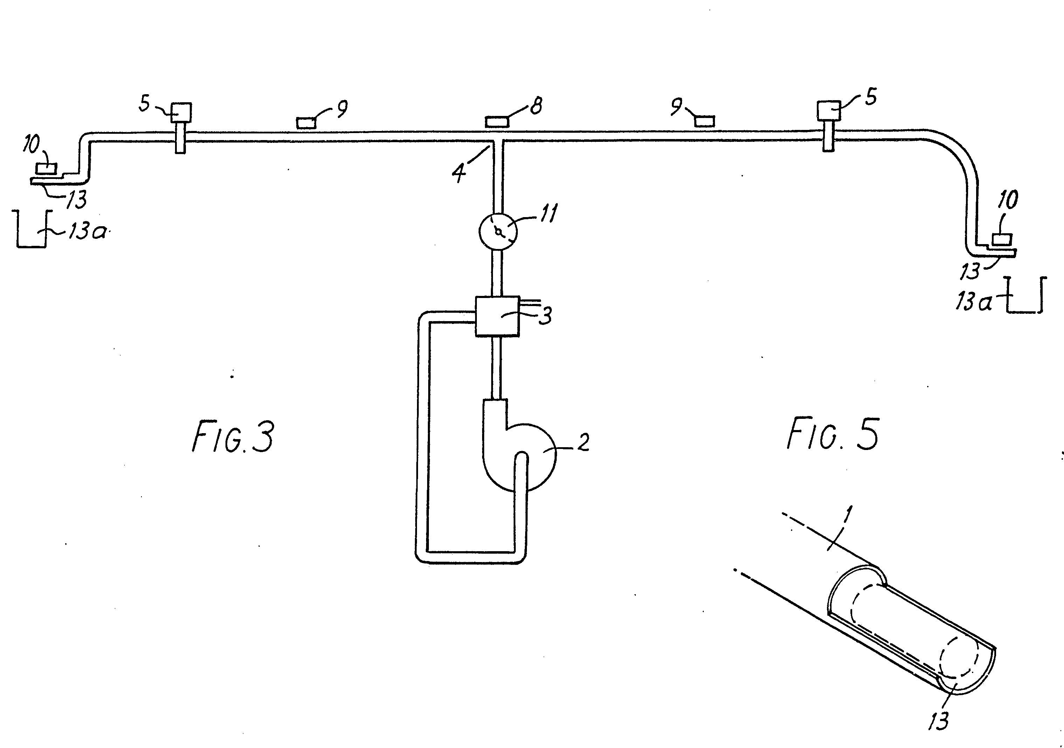

Modified pneumatic tube systems are shown in Figs 2 and 3.
Referring to the embodiment in Fig 2 there is shown a
pneumatic tube 1 with the opposite ends open. An air moving machine 2 is connected through a reversing valve
3 to a junction position 4 to the tube 1.    Detector
switches 9 are located adjacent to each end of the tube 1
and 2.    A detector switch 8 is located adjacent the junction
position 4 and adjacent the tube 1.


A butterfly valve 11 is positioned between the reversing
valve 3 and the junction position 4 instead of having
butterfly valves in the line 6 as shown in Fig. 1.
Each tube 6 has connected in it a solenoid valve 12.
A control mechanism including operating switches 10 is
located adjacent to each end of the tube 1.    Gates 5 are
located near the ends of tube 1.    The operation of the
system shown in Fig 2 is similar to that shown in Fig 1
in that when a carrier is inserted into the left hand
end of the tube the operating switch in the box 10 is
operated so that the from the air moving machine 2
valve 5 opens and air under vacuum
drives the air to cause the air to move through the
reversing valve 3 to draw air from the tube 8 through the
open butterfly valve 11.    When a carrier is inserted
into the tube 1 the solenoid valves 12 are both in the
closed position.


The carrier is pulled by air under vacuum along the tube 1
to the junction position 4.    When the carrier reaches the
detector switch 8 adjacent the junction position 4, the
reversing valve is caused to change to supply air under
pressure to propel the carrier along the tube 1 to the right hand side until the carrier reaches the junction between the tube 1 and the tube 6.    At this time the detector switch 9 is operated which serves to open the valve 12 on the right hand side as shown in Fig 2.

This reduces the supply of air under pressure in the tube 1 to slow down the carrier.    At this position, the butterfly valve 11 is substantially closed so the air supply to the tube 1 causes the air in the tube

to be at a low pressure.    After a delay, the valve 5 is opened and the solenoid

valve on the right hand side of Fig 2 is closed and air is supplied at low pressure through the butterfly valve 11 to cause the carrier to move slowly along the tube 9 to the exit where it can be picked out on the end of the tube by an operator.

Referring to the embodiment shown in Fig 3 of the drawings there is shown an air moving machine 2 and a reversing valve 3 connected to a butterfly valve 11 positioned between the reversing valve 3 and the junction position 4 in the tube 1.    There is no tube similar to the tube 6 in Figs 1 and 2, but a gate 5 is arranged adjacent to each end of the tube 1.    Detector switches 8, 9 are included and a control mechanism box 10 is located adjacent to each end of the tube 1.

When a carrier is inserted into one end of the tube say at the left hand side of Fig 1, and an operating button in the

control mechanism 10 is operated, the gate 5 at the left hand side of Fig 3 is open and the gate 5 at the right hand side of Fig 3 is closed.  Air is supplied from the air moving machine 2 through the reversing valve 3 under vacuum to draw the carrier along the tube to the detector switches on the right hand side of position 4.  At this time the switch 8 is operated to cause the reversing valve 3 to be operated whereby air is supplied under pressure to the tube 1 to cause the carrier to move to the right hand side of the tube.  Likewise at this time, the gate 5 on the left hand side of Fig 3 is closed and the gate 5 on the right hand side of Fig 3 is open.  The carrier continues until it reaches the switch 9 on the right hand side of Fig 9 upon operation of which the

butterfly valve ll is substantially closed to limit the supply of air under pressure and this causes the carrier to slow down in the tube 1.  The butterfly valve is operated carefully to supply air at low pressure to the tube 1 whereby the carrier is moved      slowly towards the end of the tube 1 where it can be removed on arrival by an operator.

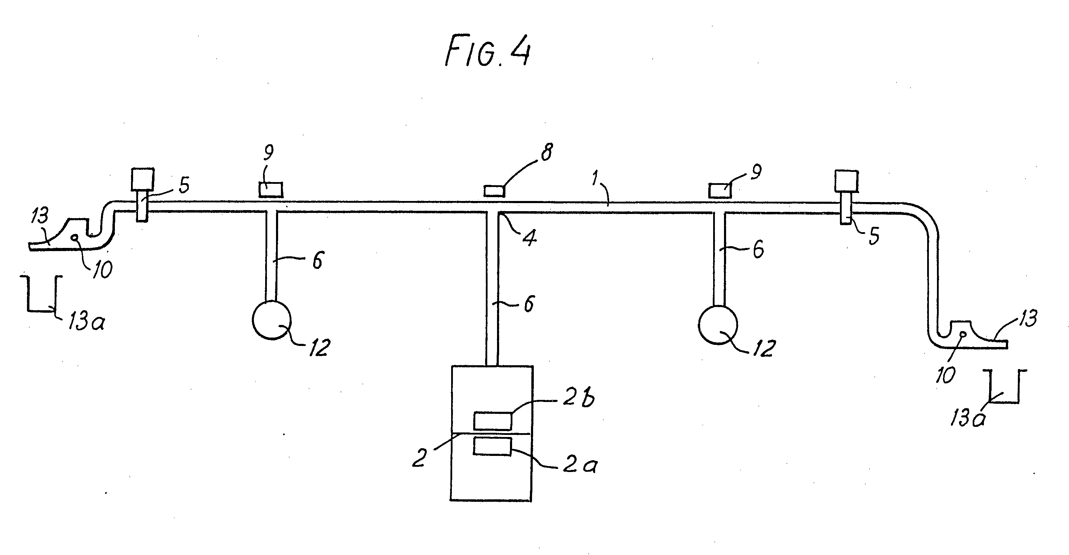

Referring to the embodiment shown in Fig 4 of the drawings, there is shown an air moving machine 2 comprising a pair of motors/with a each / turbine similar to that used in a domestic vacuum cleaner, one motor 2a being provided to supply air under vacuum and the other motor 2b being provided to supply air under pressure to the tube connected to the tube 1 at the junction position 4. These motors 2a, 2b, are operative under the control of a control means 15 (Fig.6) being a microprocessor including a speed regulating circuit.

Each end of the tube 1 is provided with a gutter portion 12 and adjacent each gutter portion a photoelectric sensing device 10 is positioned to indicate that a carrier has just been inserted into the system or has been despatched from the other end of the tube and has reached its destination. Adjacent each end of the tube 1 a gate 5 is positioned. This gate is similar to the gate shown in Fig 1 and the operative to move from one position (closed) to the other position (open) by an electric motor.

A short distance from each gate 5 is provided an air escape tube 6 with a valve 12 in the tube 6. A detector switch 9 is positioned closely adjacent to the junction of the tubes 1 and 6. Similarly, a detector switch 8 is positioned closely adjacent to the junction 4. These detector switches 8 and 9 detect the presence of a carrier passing through the tube 1.

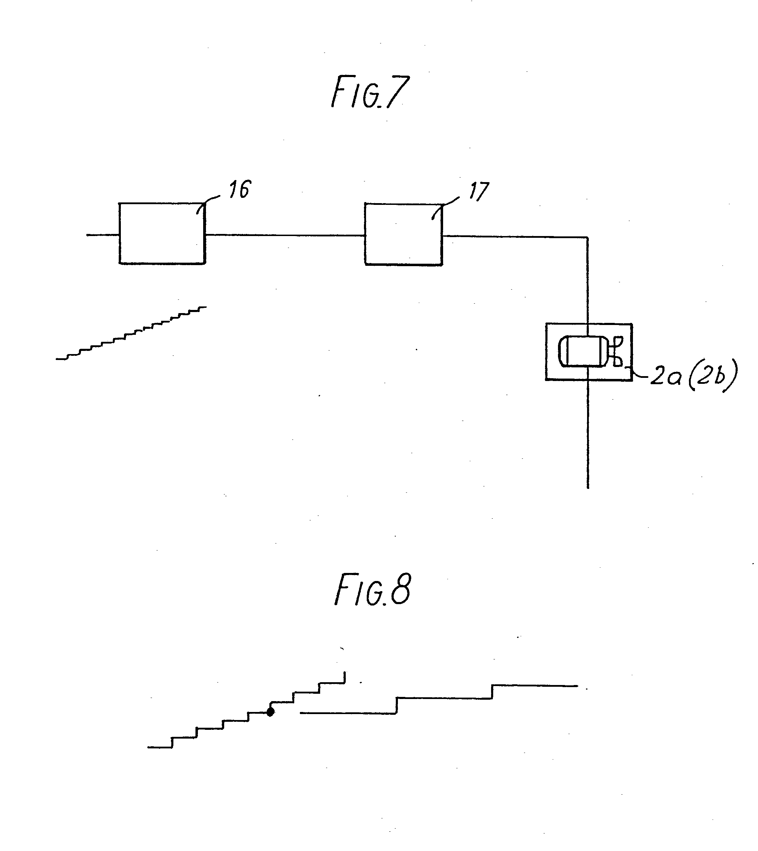

Referring to the circuit diagram shown in Fig 6 there is shown the control means 15 which is a microprocessor. The control means 15 as shown in Fig 6 is connected to the detector 8 through a junction box 8a and to the air moving machine, that is to say to the motors 2a, 2b to supply air under pressure or air under vacuum to the tube 1. A connection is also made from the control means to a respective junction box which in turn is connected to the sensing and control mechanisms at or adjacent to each end of the tube 1. Thus as shown the control means 15 is connected to a junction terminal 14 associated with a station at one end of the tube 1 and thence to a junction box 16 which has connections to the photoelectric sensing device 10, to the detector switch 9 and to the valve 12 in the air escape tube 6. The control means includes a speed regulating circuit 16 which serves to control the selected one of the motors 2a, 2b. Thus referring to Fig 7 there is included in the control means 15 a speed regulating circuit 16 which comprises a timing circuit and a stepping control.   The circuit 16 sends out a series of stepping pulses as indicated at 16a (Fig 7) to a silicon controlled rectifier circuit 17, and a selected one of these steps controls the initiation or termination of the duration of a pulse in order that the length of the duration of the pulse may be varied and hence the power supplied to the motors 2a, 2b may be controlled and hence the amount of air under pressure or vacuum supplied to the tube 1 may be controlled.

The speed regulating circuit 16 is employed to control the movement of a carrier in the carrier tube system as the carrier leaves the one terminal and as it arrives at the other terminal.   For this purpose, a memory and calculating circuit is incorporated in the control means 15.   Thus as a carrier is inserted into the pneumatic tube system at one of the stations, the insertion of the carrier is detected by the photoelectric device 10  and the detection signal is passed to the control means 15 to initiate operation of the speed regulating circuit.   Thereby a stepping pulse train is generated to increase the power supplied to the air moving machine 2 in steps.   This continues until the carrier starts to move and this movement is detected by the movement of the  carrier out of the  path  of the photoelectric device.

A circuit which includes a silicon rectifier in the control means 15 detects the position of the stepping circuit when the carrier starts to move and this position is retained in the memory of the control means 15 to give an indication of the amount of power applied just sufficient to move the carrier. As the carrier starts to move the full power is applied to the air moving means to move the carrier along the tube. In the first movement, air under vacuum is applied to the tube 1. Insertion of the carrier to energise the photo-electric device 10 into the system also initiates opening of the gate 5 adjacent the sending station.

The photo-electric device 8 is connected to the control means 15 so that when energised by passage of the carrier the supply of air under vacuum is cut off and the supply of air under pressure to the tube 1 is initiated.

The photo-electric device 9 is connected to the control means so that when energised by passage of a carrier when nearing the tube exit serves to close the valve 12 and the carrier is retarded or stopped because the gate 5 is closed. The gate 5 is then opened and air at a reduced pressure moves the carrier slowly to the gutter position 13, the airflow applied being derived from the position. retained in the memory circuit of the control means 15.

The power supplied to the air moving machine 2 is determined by the position of the stepping circuit when the carrier first stated to move. The same or an equivalent value of power is applied to the air moving machine as shown in Fig 8 and the value of the power is derived from the memory in the control means 15. If the power applied to the air moving machine is not sufficient to move the carrier to the exit station the power is increased in steps as shown in Fig. 8 but the duration between the individual steps is longer than (for example is twice) that between the steps applied to the control means during the starting operation.

It will be apparent that a carrier moving along the tube 1 under full power of the air moving machine 2 will be stopped by the build up of pressure of between the air escape tube 6 and the gate 5. The distance between the air escape tube 6 and the gate 5 must be sufficient to effect stopping of the carrier before it reaches the gate 5 and a distance of one metre has been found suitable.

By the provision of the stepping build up of the power if a carrier remains accidentally in the system, the second carrier pushes the first detained carrier out of the exit.

The control means 15 also includes control circuitry logically to repeat the operation of the system by a slow stepping build up of power if a carrier is retained in the system. It also includes a control to ensure that when a carrier is inserted into the system, a "busy" warning light is lit and further despatch systems are inhibited until the operating cycle is finished.

In operation of the system shown in Figs 4 and 6 to 8, the system starts with all the valves closed. A carrier is inserted into the system and it is detected by the photoelectric sensing device 10. This sensing is passed to the control means 15 which serves to control the opening of the gate 5 adjacent to the sending station. The motor 2a to supply air under vacuum to the tube 1 is switched on and the power to the motor 2a (and hence the air under vacuum applied to the tube 1) increases in steps until the carrier moves. Movement of the carrier is detected by the photoelectric sensing device 10 and by then the detector switch 9 adjacent the sending station, and a signal is sent to the control means 15 to apply full power to the motor 2a and open the valve 12 and close gate 5. When the carrier reaches the detector switch 8, the switch initiates switching off the power to the motor 2a and applies power after a delay of 2 to 3 seconds to the motor 2b to supply air under pressure to the tube and to close the valve 12 on the left hand side and to open the valve 12 on the right hand side. The carrier is then propelled along the tube by air under full pressure until the carrier reaches the detector switch 9 adjacent to the exit station. The carrier is retarded because the gate 15 is closed and a barrier of air is formed before the gate. The valve 12 is closed and the gate 5 adjacent to the exit station is opened and the motor 2b is re-energised at the same or equivalent power as when the carrier started to move. The carrier is moved to the gutter 13 until the trailing end of the carrier moves out of the tube and stops.

Such a system may be used for example in conveying documents or cash between an end of a tube located closely adjacent to a cashiers cash point in a bank and a central receiving depot in the bank. By virtue of the fact that no box is required, we are able to provide a pneumatic tube system with a minimum of space at the bank cashier's cash position.

Although the system has been described in relation to a single tube system , junctions may be employed to enable a carrier to be moved to any one of a predetermined number of stations within a pneumatic tube system.

What we claim is

1 A pneumatic tube carrier system comprising an air tube connecting two stations and through which a carrier is moved, a supply of air for supplying air under pressure or under vacuum to propel the carrier between the stations, and an air pressure    means to cause the air in the tube to assume a pressure close to atmosphere pressure at the exit end of the tube as the carrier approaches the exit end to cause the carrier to travel slowly along the exit part of the tube as the carrier reaches the end part of the tube.

2 A pneumatic tube carrier system according to Claim 1 wherein the air tube includes an air escape tube adjacent the end of the tube and a gate valve positioned between the air escape tube and the end of the tube to close off the exit of air from the end of the tube.

3 A pneumatic tube carrier system according to Claim 1 and 2 wherein a carrier detector switch is arranged adjacent the air escape tube to detect the arrival of a carrier to open the air escape tube and to open the gate valve to permit the carrier to pass to the exit under reduced pressure.

4 A pneumatic tube carrier system according to Claim 3 wherein the reduced pressure is supplied by opening the air escape tube.

5 A pneumatic tube carrier system according to Claim 3 wherein the reduced pressure is supplied by reducing the pressure of air generated by an air moving machine.

6   A pneumatic tube carrier system according to Claim 5 wherein the air moving machine is controlled by a speed regulating circuit.

7   A pneumatic tube carrier system according to Claim 6 wherein the speed regulating circuit includes a circuit to control the initiation of movement of the carrier by increasing the air pressure and applying a pressure derived from the initiating air pressure to propel the carrier at the tube exit.

8   A pneumatic tube carrier system according to claim 7 wherein the movement initiating circuit is a stepping circuit.

9   A pneumatic tube carrier system according to any one of the preceding claims wherein each end of the tube has a photo-electric switch to detect the positioning of a carrier at a station, to detect the despatch of the carrier from that station and to detect the arrival of the carrier at the exit station.

10   A pneumatic tube carrier system according to any one of the preceding claims wherein each station includes a gutter tube part at the end of the tube.

11 .   A pneumatic tube carrier system constructed, arranged and adapted to operate substantially as herein described with reference to the accompanying drawings.

*FIG.1*

0045625

FIG.2

FIG.3

FIG.5

5 9 8 9 5
10
13
13a
4
11
3
2
1
13
10
13
13a

0045625

FIG.4

FIG.6

FIG.7

16  17

2a (2b)

FIG.8